# EUROPÄISCHE PATENTANMELDUNG

(11) **EP 0 886 443 A2**
(43) Veröffentlichungstag der Anmeldung: **23.12.1998**
(21) Anmeldenummer: 98440105.9
(22) Anmeldetag: 25.05.1998
(51) Int. Cl.: H04N 7/173

(54) **Digitaler Dekoder eines Übertragungssystems**

(30) Priorität: 31.05.1997 DE 19722915
(71) Anmelder: Alcatel Alsthom Compagnie Generale d'Electricité, 75088 Paris (FR)
(72) Erfinder: Barth, Ulrich, 70825 Münchingen (DE)
(74) Vertreter: Schätzle, Albin, Dipl.-Phys.

(57) **Zusammenfassung**

In einem Service-on-demand System soll das Benutzerverhalten ermittelt werden, um die Menuesteuerung analysieren und optimieren zu können. Dazu wird ein digitaler Dekoder ( STB ) verwendet, mit einer Steuereinheit (µP), die über ein zu empfangendes Taktsignal ansteuerbar ist, und geeignet ist, Eingabesequenzen eines Benutzers beinhaltend eine Vielzahl von Befehlen zusammen mit den jeweiligen Eingabezeitpunkten der einzelnen Befehle zu erfassen und paketweise in einer Schreib/Lesespeicher ( MEMO ) abzuspeichern. Alternativ können anstelle der Eingabezeitpunkte mittels des Taktsignals die zeitlichen Abstände zwischen den einzelnen Befehlen ermittelt und abgespeichert werden. Zusätzlich können die abgespeicherten Pakete telemetrisch zu einem Server übertragen werden, wo sie zusammen mit Paketen einer Vielzahl von digitalen Dekodern ausgewertet werden.

## Beschreibung

Die Erfindung bezieht sich auf einen digitalen Dekoder eines Übertragungssystems, insbesondere eines Service-on-demand Systems. Ein solcher digitaler Dekoder, auch als Set-Top Box bezeichnet, beinhaltet u.a. eine Steuereinheit, z.B. einen Prozessor oder einen Mikrokontroller, und einen Schreib-/Lesespeicher, z.B. ein RAM; RAM = Read Access Memory oder einen nicht flüchtigen Speicher, z.B. ein sog. Flash Memory.

Eine Set-Top Box ist z.B. aus dem Artikel ,,Standard für Set-Top Boxen" aus der Zeitschrift Funkschau, 17/1995, Seiten 42 bis 44 bekannt. Eine Set-Top Box dient als Schnittstelle zwischen Endgeräten, wie z.B. einem Fernsehgerät, und einem Server, wie z.B. einem Video-on-demand Server zum Anbieten von Videofilmen, die telemetrisch über einen Benutzer auswählbar sind und anschließend telemetrisch über ein Übertragungsnetz zum Benutzer übertragen werden. Die Set-Top Box dient dabei zum Dekodieren der empfangenen Videofilme und zum Aufbereiten der Videofilme, z.B. zur Umsetzung der in digitaler Form empfangenen Videofilme in eine analoge Form, und zur Weiterleitung der aufbereiteten Videofilme zum Fernsehgerät. Die Set-Top Box beinhaltet dazu als Steuereinheit einen Prozessor und ein RAM, das als Zwischenspeicher genutzt wird. Des weiteren dient die Set-Top Box dazu, die vom Benutzer z.B. über eine Infrarot Fernbenienung zur Set-Top Box übertragenen Befehle zu empfangen, aufzubereiten und zum Server zu übertragen. Die Befehle beinhalten die Benutzerwünsche, z.B. eine Menueauswahl zum Auffinden einer Übersicht eines Angebots an Videofilmen, eine weitere Menueauswahl zum Auffinden eines spezielleren Angebots an Videofilmen, die Auswahl eines Videofilms und das Bestellen eines Videofilms.

In einem solchen Service-on-demand System soll das Benutzerverhalten ermittelt werden, um die Menuesteuerung analysieren und optimieren zu können. Dies geht z.B. aus dem Artikel "Softwarearchitekturen für interaktive digitalle Dekoder" aus der Zeitschrift Fernseh- und Kino-Technik, Nr. 3/1996, Seiten 92 bis 102 hervor. Zu beantwortende Fragen sind z.B.: Wie schnell erledigt ein Benutzer eine vorgegebene Aufgabe ? oder Wieviele Bedienungsfehler macht der durchschnittliche Benuzer ? oder Wie lange dauert die erneute Einarbeitung nach mehrtätiger Pause ? Die Ermittlung der Antworten erfolgt durch Befragung von Testpersonen, was sehr aufwendig ist und u.U. zu subjektiven Ergebnissen führt.

Aus WO 94/14280 ist es bekannt die vom Benutzer ausgewählten Videofilme in der Set-Top Box des Benutzers abzuspeichern und zu gegebener Zeit von einem Server aus im Pollingverfahren abzurufen. Damit können allerdings nur die vom Benutzer tatsächlich ausgewählten und bestellten Videofilme überwacht werden. Es ist keine Aussage darüber möglich, wie der Benutzer zu seiner Auswahl gelangt ist. Eine Analyse über die Benutzerführung und die Menuesteuerung zur Beantwortung obiger Fragen ist somit nicht möglich.

Es ist daher eine Aufgabe der Erfindung das Benutzerverhalten von Benutzern eines Service-on-demand Systems zu ermittelt, um die Menuesteuerung und /oder Benutzerführung analysieren und anschließend optimieren zu können.

Erfindungsgemäß wird obige Aufgabe gelöst durch einen digitalen Dekoder gemäß Patentanspruch 1 oder 2. Im digitalen Dekoder werden alle Befehle des Benutzers zusammen mit den jeweiligen Eingabezeitpunkten oder den zeitlichen Abständen zwischen den einzelnen Befehlen erfaßt und abgespeichert. Damit ist eine detaillierte und zeitgenaue Ermittlung des Benutzerverhaltens möglich. Des weiteren ist eine objektive und repräsentative Analyse möglich, da nicht ein subjektives Verhalten von Testpersonen ausgewertet wird, sondern unter realen Bedingungen ermittelte Eingabesequenzen einer Vielzahl von Benutzern eines existierenden Service-on-demand Systems.

Vorteilhafte Ausgestaltungen sind den abhängigen Patentansprüchen zu entnehmen.

Eine besonders bevorzugte Ausgestaltung der Erfindung beinhaltet eine Sendeeinheit, mittels derer die abgespeicherten Eingabesequenzen zum Server übertragen werden können. Damit ist eine telemetrische Ermittlung des Benutzerverhaltens möglich. Dies spart Zeit und Kosten. Die Ermittlung des Benutzerverhaltens soll lediglich statistischen Zwecken dienen. Um die Anonymität der Benutzer zu gewährleisten, kann bei der Übertragung der Eingabesequenzen die Adresse des jeweiligen digitalen Dekoders unterdrückt werden. Eine weitere Möglichkeit besteht darin, daß der Server nacheinander alle digitalen Dekoder telemetrisch ausliest und aus den empfangenen Signalen die Adressen ausschneidet.

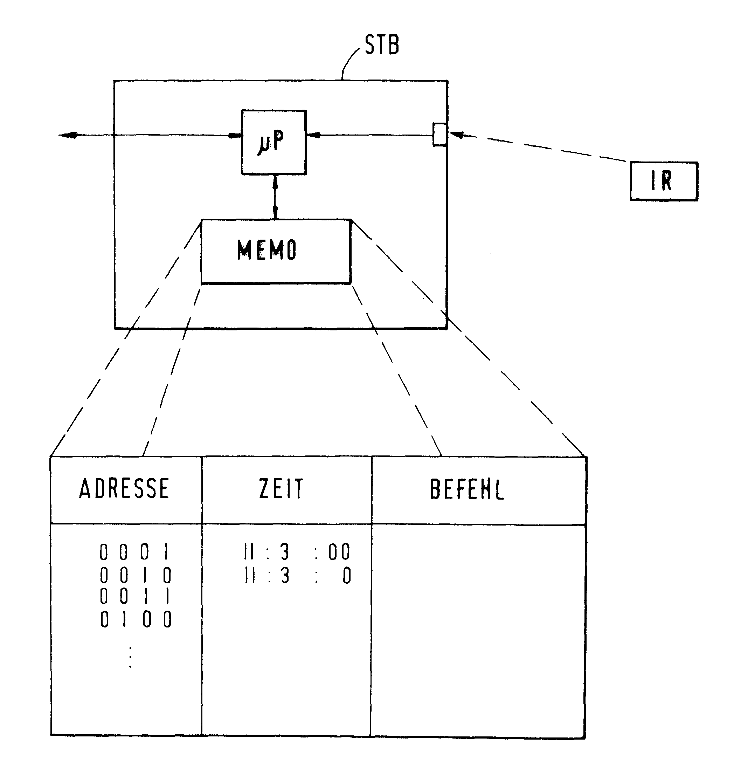

Im folgenden wird die Erfindung anhand eines Ausführungsbeispiels unter Zuhilfenahme einer Figur erläutert. Die Figur zeigt eine schematische Darstellung eines erfindungsgemäßen digitalen Dekoders.

Der digitale Dekoder STB, auch als Set-Top Box bezeichnet, beinhaltet alle üblichen Elemente eines digitalen Dekoders, wie sie z.B. aus dem Artikel "Standard für Set-Top Boxen" aus der Zeitschrift Funkschau, 17/1995, Seiten 42 bis 44 bekannt sind. Dazu gehören z.B. ein Tuner, ein Demodulator, ein Dekoder, als Steuereinheit µP ein Prozessor und als Schreib-/Lesespeicher MEMO ein RAM.

Der digitale Dekoder dient als Schnitstelle zwischen einem Fernsehgerät, und einem Server, wie z.B. einem Video-on-demand Server zum Anbieten von Videofilmen, die telemetrisch über ein auf dem Fernsehgerät visualisiertes Menue von einem Benutzer auswählbar sind und anschließend telemetrisch über ein Übertragungsnetz zum Benutzer übertragen werden. Die Auswahl erfolgt über eine Infrarot-Fernbedienung IR eines Benutzers, mittels derer Befehle zum digitalen Dekoder STB übertragen werden. Die Befehlseingaben des Benutzers, die auch als eine Eingabesequenz aufgefaßt werden können, vom Einschalten des digitalen Dekoders STB bis zum Abschalten, beinhalten Befehle, wie z.B. Suchen, Auswählen, Bestellen, Ansicht sowie ggf. Vor- und/oder Rückspulen eines Videofilms.

Die Steuereinheit µP wird über ein nicht dargestelltes Taktsignal angesteuert, das sie z.B. vom nicht dargestellten Server über ein Übertragungsnetz empfängt. Das Taktsignal gibt die aktuelle Uhrzeit an, z.B. die von der Funkuhr in Braunschweig ausgesendete Uhrzeit. Alternativ kann das Taktsignal in einem im digitalen Dekoder vorgesehenen Taktgenerator erzeugt und anschließend der Steuereinheit µP zugeführt werden. Der Taktgenerator beinhaltet beispielsweise ein lokaler Oszillator mit einer Taktfrequenz von 1 Hz.

In der Steuereinheit µP ist ein nicht dagestellter Vergleicher vorgesehen, um den Eingangszeitpunkt eines Befehls mit der aktuellen Uhrzeit zu vergleichen und die ermittelte Uhrzeit dem jeweiligen Befehl zuzuordnen.

Die Steuereinheit µP ist derart programmiert, daß sie Eingabesequenzen eines Benutzers beinhaltend eine Vielzahl von Befehlen erfassen kann. Die einzelnen Befehle werden gesteuert von der Steuereinheit µP aufbereitet, z.B. in einer Kodiereinheit und einem Protokollumsetzer, und anschließend zum Server übertragen. Zusätzlich werden alle Befehle mit den ihnen zugeordneten Uhrzeiten im Schreib-/Lesespeicher MEMO abgespeichert. Das Speichern erfolgt in einem Paket, beinhaltend mehrere Adressen eines Adreßbereichs, zu denen in einer Art Tabelle die Befehle mit ihren jeweiligen Eingabezeitpunkten abgespeichert werden. Für jede Eingabesequenz wird ein separater Adreßbereich im Schreib/Lesespeicher MEMO genutzt. Die erste Befehlseingabe erfolgt beispielsweise um 11:30:00 Uhr. Im Schreib-/Lesespeicher MEMO wird daraufhin unter der Adresse 0001 die Uhrzeit 11:30:00 Uhr und die Art des Befehls abgespeichert, z.B. 000 001, wobei 000 das Menuelevel repräsentiert, also das nullte von acht Leveln und 001 die Auswahlnummer 1 von acht möglichen Auswahlnummern, die im nullten Level möglich sind.

Die zweite Befehlseingabe erfolgt beispielsweise um 11:31:00 Uhr. Im Schreib-/Lesespeicher MEMO wird daraufhin unter der Adresse 0010 die Uhrzeit 1 1:31:00 Uhr und die Art des Befehls abgespeichert, z.B. 001 100, wobei 001 das Menuelevel repräsentiert, also das erste Level und 100 die Auswahlnummer 4 von acht möglichen Auswahlnummern, die im ersten Level möglich sind. Die dritte Befehlseingabe erfolgt beispielsweise um 11:32:10 Uhr. Im Schreib-/Lesespeicher MEMO wird daraufhin unter der Adresse 0011 die Uhrzeit 11:32:10 Uhr und die Art des Befehls abgespeichert, z.B. 010 111, wobei 010 das Menuelevel repräsentiert, also das zweite Level und 111 die Auswahlnummer 8 von acht möglichen Auswahlnummern, die im zweiten Level möglich sind. Die vierte Befehlseingabe erfolgt beispielsweise um 11:35:36 Uhr. Im Schreib/Lesespeicher MEMO wird daraufhin unter der Adresse 0100 die Uhrzeit 11:35:36 Uhr und die Art des Befehls abgespeichert, z.B. 011 101, wobei 011 das Menuelevel repräsentiert, also das dritte Level und 101 die Auswahlnummer 5 von acht möglichen Auswahlnummern, die im dritten Level möglich sind.

Die Adressbereiche, in denen jeweils einzelne Eingabesequenzen abgespeichert sind, werden gesteuert über die Steuereinheit µP in einer Dateiverwaltung verwaltet und können so jederzeit ausgelesen werden.

Der digitale Dekoder beinhaltet des weiteren eine nicht dargestellte Empfangseinheit zum Empfang von Signalen beinhaltend eine Anfrage zum telemetrischen Auslesen des Schreib-/Lesespeichers MEMO und eine nicht dargestellte Sendeeinheit zum Übertragen der abgespeicherten Pakete. Die abgespeicherten Eingabesequenzen können z.B. durch den Server telemetrisch abgerufen werden, in dem dieser eine Anfrage zum jeweiligen digitalen Dekoder STB unter Angabe seiner Adresse überträgt. In der Empfangseinheit wird geprüft, ob das empfangene Signal für den jeweiligen digitalen Dekoder STB bestimmt ist, indem die empfangene Adresse mit der Adresse des Dekoders STB verglichen wird. Stimmen die Adressen überein, so leitet die Empfangseinheit die Anfrage an die Steuereinheit µP weiter, die in der Dateiverwaltung die bis zum Zeitpunkt der Anfrage abgespeicherten Eingabesequenzen detektiert und anschließend zur Sendeeinheit überträgt, von wo aus sie zusammen mit der Adresse des digitalen Dekoders STB zum Server übertragen werden.

Anstelle einer Anfrage des Servers kann auch eine Sendeeinheit zum Übertragen der abgespeicherten Pakete, beinhaltend die Eingabesequenzen, vorgesehen sein, wobei die Sendeeinheit geeignet ist bei der Übertragung der Pakete die Übertragung der Adresse des digtalen Dekoders STB zu unterdrücken. Dies hat den Vorteil, daß der Server nicht alle digitalen Dekoder STB abfragen muß. Dadurch kann Zeit eingespart werden, insbesondere dann, wenn einzelne digitale Dekoder STB längere Zeit nicht genutzt wurden und somit mehrere aufeinanderfolgende Abfragen, die z.B. einmal wöchentlich durchgeführt würden, sinnlos wären, da keine neu abgespeicherten Eingabesequenzen vorlägen. Der digitale Dekoder STB sendet somit von sich aus, z.B. nach einer gewissen vorbestimmten Zeitspanne, z.B. einmal im Monat, die abgespeicherten Pakete zum Server, sofern neue Pakete vorliegen. Sind keine vorhanden, wird nichts ausgesandt. Auf diese Art und Weise wird ferner die Anonymität der Benutzer optimal geschützt. Die Erfindung kann auch bei einem Übertragungssystem ohne Rückkanal, z.B. vergleichbar dem Bildschirmtext ( BTX ), zum Server angewendet werden. Dann werden die abgespeicherten Eingabesequenzen z.B. per Post zum Server übertragen.

Anstelle des Abspeicherns der Eingabesequenzen zusammen mit ihren Eingabezeitpunkten, können die Eingabesequenzen auch zusammen mit den zeitlichen Abständen zwischen den einzelnen Befehlen abgespeichert werden. Dies spart Speicherplatz, da z.B. nur die Differenzen der Uhrzeiten abgespeichert werden brauchen und nicht die Absolutwerte der Uhrzeiten.

Die Steuereinheit µP beinhaltet dazu z.B. einen Zähler, um mittels des Taktsignals die zeitlichen Abstände zwischen den einzelnen Befehlen zu ermitteln. Der Zähler weist auf : einen Zähleingang, dem das Taktsignal zugeführt wird, einen Ausgang, dessen Wert bei jedem Eingang eines Befehls ausgelesen wird, um die zeitlichen Abstände zu ermitteln und einen Rücksetzeingang, um den Zähler bei jedem Eingang eines Befehls nach dem Auslesen des Ausgangswerts auf Null zurückzusetzen.

Die Eingabesequenzen des Benutzers werden dann zusammen mit den jeweiligen zeitlichen Abständen der einzelnen Befehle paketweise abgespeichert, vergleichbar obiger tabellenförmigen Abspeicherung. So kann z.B. mit obigem Beipiel unter der Adresse 0001 die Zeitangabe 000 000000 abgespeichert werden, 000 gibt dabei die Minutenanzahl an, 000000 die Sekundenanzahl. Soll der genaue Zeitpunkt der Eingabe festgehalten werden, so kann unter der Adresse auch die Uhrzeit 11:30:00 Uhr abgespeichert werden. Unter der Adresse 0010 wird dann der zeitliche Abstand zwischen Befehl 1 und Befehl 2 abgespeichert. Der zeitliche Abstand beträgt eine Minute, so daß die Zeitangabe 001 000000 abgespeichert wird. Unter der Adresse 0011 wird dann der zeitliche Abstand zwischen Befehl 2 und Befehl 3 abgespeichert. Der zeitliche Abstand beträgt eine Minute zehn Sekunden, so daß die Zeitangabe 001 001010 abgespeichert wird. Unter der Adresse 0100 wird dann der zeitliche Abstand zwischen Befehl 3 und Befehl 4 abgespeichert. Der zeitliche Abstand beträgt drei Minuten sechsundzwanzig Sekunden, so daß die Zeitangabe 010 01 1010 abgespeichert wird.

## Patentansprüche

1. Digitaler Dekoder ( STB ) eines Übertragungssystems, insbesondere eines Service-on-demand Systems, mit einer Steuereinheit (µP) und einem Schreib-/Lesespeicher ( MEMO ),
**dadurch gekennzeichnet**, daß die Steuereinheit (µP) über ein zu empfangendes Taktsignal ansteuerbar ist, und daß die Steuereinheit (µP) geeignet ist, Eingabesequenzen eines Benutzers beinhaltend eine Vielzahl von Befehlen zu erfassen, mittels des Taktsignals die jeweiligen Eingabezeitpunkte der einzelnen Befehle zu ermitteln und den Schreib-/Lesespeicher ( MEMO ) zu steuern, um die Eingabesequenzen des Benutzers zusammen mit den jeweiligen Eingabezeitpunkten der einzelnen Befehle paketweise abzuspeichern.

2. Digitaler Dekoder ( STB ) eines Übertragungssystems, insbesondere eines Service-on-demand Systems mit einer Steuereinheit (µP) und einem Schreib-/Lesespeicher ( MEMO ),
dadurch gekennzeichnet, daß die Steuereinheit über ein zu empfangendes Taktsignal ansteuerbar ist, und daß die Steuereinheit (µP) geeignet ist, Eingabesequenzen eines Benutzers beinhaltend eine Vielzahl von Befehlen zu erfassen, mittels des Taktsignals die zeitlichen Abstände zwischen den einzelnen Befehlen zu ermitteln und den Schreib/Lesespeicher ( MEMO ) zu steuern, um die Eingabesequenzen des Benutzers zusammen mit den jeweiligen zeitlichen Abständen der einzelnen Befehle paketweise abzuspeichern.

3. Digitaler Dekoder ( STB ) nach Anspruch 2, dadurch gekennzeichnet, daß die Steuereinheit (µP) einen Zähler beinhaltet, der einen Zähleingang aufweist, dem das Taktsignal zugeführt wird, der einen Ausgang aufweist, dessen Wert bei jedem Eingang eines Befehls ausgelesen wird, um die zeitlichen Abstände zu ermitteln und der einen Rücksetzeingang aufweist, um den Zähler bei jedem Eingang eines Befehls nach dem Auslesen des Ausgangswerts auf Null zurückzusetzen.

4. Digitaler Dekoder ( STB ) nach Anspruch 1, dadurch gekennzeichnet, daß das Taktsignal die aktuelle Uhrzeit angibt, und daß in der Steuereinheit (µP) ein Vergleicher vorgesehen ist, um den Eingangszeitpunkt eines Befehl mit der aktuellen Uhrzeit zu vergleichen und die ermittelte Uhrzeit dem jeweiligen Befehl zuzuordnen.

5. Digitaler Dekoder ( STB ) nach einem der Ansprüche 1 bis 4, dadurch gekennzeichnet, daß ein Taktgenerator vorgesehen ist, um das Taktsignal zu erzeugen und der Steuereinheit (µP) zuzuführen.

6. Digitaler Dekoder ( STB ) nach einem der Ansprüche 1 bis 5, dadurch gekennzeichnet, daß eine Empfangseinheit zum Empfang von Signalen beinhaltend eine Anfrage zum telemetrischen Auslesen des Schreib/Lesespeichers ( MEMO) und eine Sendeeinheit zum Übertragen der abgespeicherten Pakete vorgesehen sind.

7. Digitaler Dekoder ( STB ) nach einem der Ansprüche 1 bis 5, dadurch gekennzeichnet, daß eine Sendeeinheit zum Übertragen der abgespeicherten Pakete vorgesehen sind, wobei die Sendeeinheit geeignet ist bei der Übertragung der Pakete die Übertragung der Adresse des digtalen Dekoders ( STB ) zu unterdrücken.
